# EUROPEAN PATENT APPLICATION

(11) **EP 2 680 581 A1**
(43) Date of publication of application: **01.01.2014**
(21) Application number: 12305758.0
(22) Date of filing: 28.06.2012
(51) Int. Cl.: H04N 7/26, H04N 7/50

(54) **Method and apparatus for dynamic adaptation of video encoder parameters**

(71) Applicant: Alcatel Lucent, 75007 Paris (FR)
(72) Inventor: Verzijp, Nico, 2018 Antwerpen (BE); Macq, Jean-François, 1083 Ganshoren (BE); Rondao Alface, Patrice, Nivelles 1400 (BE)
(74) Representative: ALU Antw Patent Attorneys

(57) **Abstract**

A method for adapting at least one video encoding parameter to be used for encoding of a video for being transmitted from a server to a client, comprises a step of determining whether the movement speed of a region of interest over successive ones of previously encoded and transmitted frames of said video exceeds a predetermined threshold value, and a step of adapting said at least one video encoding parameter if said predetermined threshold value is exceeded.

## Description

The present invention relates to a method and apparatus for adapting video encoder parameters.

High spatial-resolution video, also referred to as Ultra High Definition video, is becoming more and more common. This type of content ranges from High Definition, hereafter abbreviated with HD, video with 1920×1080 pixels per frame to higher resolution video either directly acquired with advanced optics and image sensors or obtained from stitched views from multiple cameras. Direct delivery of this type of content in its entirety to end-user-devices is often not possible due to bandwidth constraints.

A possible solution is to down sample the complete content before transmission but this results in a low-quality image, which is not desirable.

In another solution the end-user will first operate a Region of Interest, hereafter abbreviated by ROI throughout the remainder of this document. This ROI is typically a lot smaller compared to the UHD input video and may fit to the user device's native display resolution. In response to an end-user command, the image will be cropped at the server side to the desired ROI before encoding and transmission. This solution offers better image quality at the cost of a per-user encoding. Such system may however not scale to a very large number of users, but it is very well suited for e.g. surveillance applications. To improve scalability, the system can be distributed over multiple proxy servers, each responsible to serve a pre-defined number of neighboring users.

Problems with such an interactive ROI encoding arise in case the end-user starts navigating, e.g. by interactively displacing, his/her ROI into the whole available spatial content on his/her display. Depending on the encoder configuration, two observations can be made with respect to prior art solutions for this:
a/ Constant quality encoding (fixed quantization) results in a dramatic bandwidth increase.
b/ Contant bitrate encoding keeps the bandwidth under control but the quality will suffer, even in the case of a static ROI.

It is therefore an object of embodiments of the present invention to present a method of the known type but which does not show the aforementioned disadvantages.

According to embodiments of the present invention this object is achieved by a method for adapting at least one video encoding parameter to be used for encoding of a video for being transmitted from a server to a client, said method comprising a step of determining whether the movement speed of a region of interest over successive ones of previously encoded and transmitted frames of said video exceeds a predetermined threshold value, and a step of adapting said at least one video encoding parameter if said predetermined threshold value is exceeded.

In this way, by adapting the encoder parameters based on the speed of the ROI movement itself, bandwidth peaks are prevented in case fast ROI motion is detected. In addition the impact on the video quality can be reduced.

In an embodiment said movement speed of said region of interest is determined by monitoring commands issued by said client on said region of interest.

This allows to use direct input from user navigation commands.

In another embodiment said movement speed of said region of interest is determined by monitoring previously determined encoding decisions used during encoding of previous frames.

In this case the ROI motion is determined indirectly based on some statistics of previously encoding decisions made by the encoder.

The at least one encoding parameter to be adapted can be a quantization parameter which can be adapted such as to increase with increasing movement speed of said region of interest.

Alternatively said at least one encoding parameter may relate to a changing from inter to intra-coding, such that in case said movement speed of said region of interest exceeds said predetermined threshold value, intra-coding of macroblocks will be enforced.

In yet another variant the at least one encoding parameter may relate to the use of a deblocking filter which is enforced in case said movement speed of said region of interest exceeds said predetermined threshold value.

The present invention relates as well to embodiments of a video server for performing the above mentioned method.

The present invention relates as well to a computer program product comprising software adapted to perform the method steps in accordance to any of the claims 1 to 6, when executed on a data-processing apparatus.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Figs. 1a-b schematically show typical prior art configurations of a client/server system,
Fig. 2 explains a possibility to measure the ROI movement speed,
Figs. 3a-b show embodiments of a client/server configuration according to the invention,
Fig. 4 shows an embodiment of the method.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

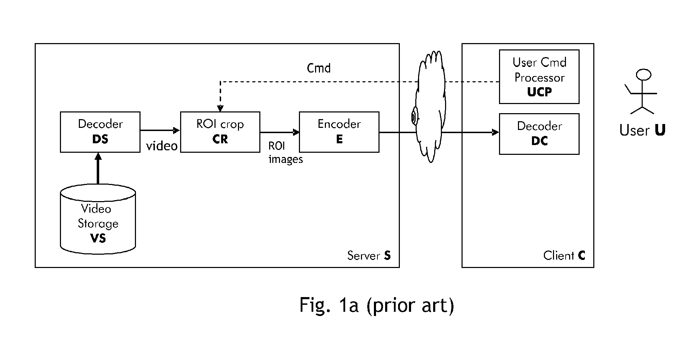

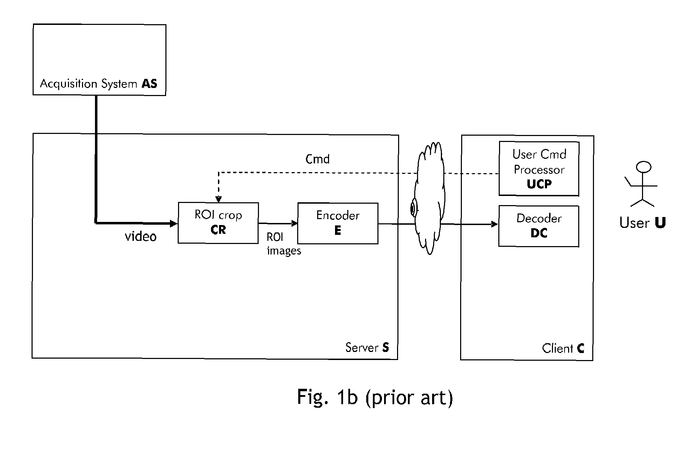

Figs. 1a-b depict prior art systems, which can e.g. be based on a H.264 encoder with Variable Bit Rate (VBR) output. In a typical configuration such as depicted in Fig. 1a a video storage device VS, wherein a large number of video files can be stored, is part of a server S for providing these video files to a client device C. In an alternative embodiment this video storage device can be a separate entity coupled to the server S. In view of the storage capabilities of the storage device, which can be made of any type of memory, e.g. a hard disk drive, an electronically erasable or non-volatile memory, or any other type of memory capable to store digital data, the video files are generally stored in a compressed form. In these situations, a decoder DS may be put between the video storage and the server, or can be part of the server itself, such as depicted in Fig. 1a, to uncompress the stored compressed video files to restore them to their original uncompressed format. Alternatively, such as depicted in fig. 1b, the server can also be coupled to an acquisition system AS comprising one or more cameras which may output the video uncompressed, and directly to a ROI cropping device CR of the server.

In both configurations the original video files are thus received by such a ROI cropping device CR, which is further adapted to receive from the client device C instructions with respect to this cropping. The client device itself generally comprises a display (not shown on figs. 1a-b) for showing the video transmitted from the server to the client and a user interface for receiving cropping instructions from the user. These instructions may be input by a user U, via any type of user interface (not shown on Figs. 1a-b) which can e.g. comprise a touch interface, a keyboard, a mouse, or any other type of gesture detection interface etc, for receiving information as to the location of the ROI or to which size the user wants to crop the displayed image. These are generally denoted ROI navigation commands such as pan/tilt commands, which generally assume that the size of the ROI is initially equal to the resolution of the end-users' device. Also zoom commands that allow to change the size of the ROI can be input. This user interface is coupled to a user command processor UCP which is adapted to translate these received instructions from the user interface into suitable commands understandable by the ROI cropping device CR in the server.

In another configuration the cropping instructions are provided by the user command processor autonomously, thus without any input from a human user, taking into account the size restriction of the display of the client device. For instance, if the original size of an image in the server comprises 8000x4000 pixels, and the display of the client is only suited to show 1880 by 800 pixels, the user command processor may autonomously generate a cropping command to the ROI cropping device to select a region of interest of 1880x800 pixels (e.g. of the upper left corner of the image or centred on the 8Kx4K image).

Upon receipt of these cropping instructions, the ROI cropping device will thus crop the large image, thus cut out an indicated (selected or predefined) region out of the large image, to the desired reduced size, and provide this to an encoder for encoding the selected ROI for then transmission of this encoded ROI to the client. Upon receipt thereof by the client, a decoder device DC of the client will then decode the received cropped image, and provide this to a display device (not shown on Figs. 1a-b) for being viewed by the user U. The selected cropped parts of the original image are called ROI images. The server encoder E thus receives the cropped ROI images as in Figures 1a-b.

When a user starts ROI navigation e.g. by providing pan/tilt input instructions via the client user interface, the user command processor UCP will translate them into commands understandable to the ROI cropping device. As earlier mentioned, problems may arise in case the end-user starts navigating (i.e. interactively displacing) his/her ROI into the whole available spatial content. Depending on the encoder configuration, two observations can be made with respect to prior art solutions for this:
a/ Constant quality encoding (fixed quantization) results in a dramatic bandwidth increase. Indeed, for fast ROI movement, there is very little or even no motion compensation possible (reference frames do not sufficiently overlap with the current ROI position), effectively resulting in a bandwidth comparable to intra only encoding. Experiments have shown that bandwidth can increase with a factor of 6 or more. For a 1Mbps stream (on average), bandwidth increases to 6Mbps and even more have been observed.
b/ Contant bitrate encoding keeps the bandwidth under control but the quality will suffer, even in the case of a static ROI.

In order to solve these prior art problems, the server S includes an additional functionality, for dynamically adapting the encoder parameters based on the speed of the ROI movements input by the user. When a ROI motion is detected, which exceeds a predetermined threshold value, the encoding parameters are updated such as to prevent bandwidth peaks and/or too strong impact on the video quality.

This threshold value can be expressed in absolute number of pixels shift per frame, e.g. 32 pixels per frame. It may also be expressed in an absolute number of macroblocks shift per frame, e.g. 2 macroblocks (which for H.264 coding corresponds to 32 pixels as 1 macroblock corresponds to 16 by 16 pixels). In another embodiment the threshold can vary, and be based on statistical measurements of the encoder performance itself. These and other examples will be explained more into detail in a further paragraph of this document.

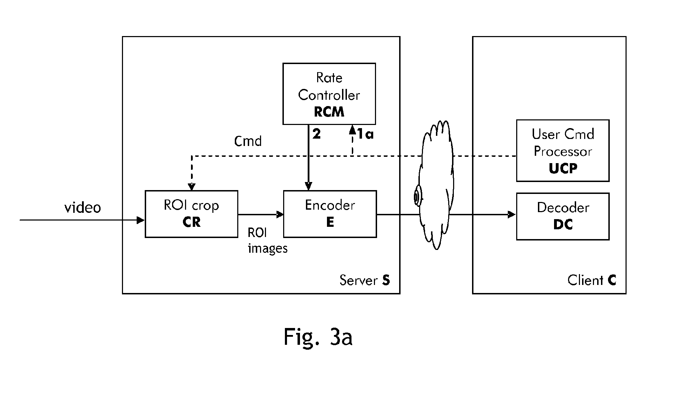

In an embodiment, the motion detection and determination of how the encoder parameters are to be updated, is performed in a separate module of the server. This is shown in Figs. 3a-b, wherein the server is equipped with a rate controller module RCM. In order not to overload the drawings, the video storage, decoder, acquisition system and user are no longer shown in Figs. 3a-b as they are no real contributing elements to the invention.

It is also to be remarked that in other embodiments the server does not need to contain a separate module RCM for incorporating this extra functionality, and all server functions can as well be performed by means of one processor device, which can receive its instructions from one or more computer programs, either encoded on a carrier such as a compact disk, or stored on another type of fixed or mobile memory attachable or incorporated within the server, or even downloadable from a storage server towards the video server under consideration.

In an embodiment, wherein the speed of the ROI movement is detected based on the user input commands, the functionality of the rate controller module RCM will then imply that the user navigation commands with respect to the ROI or in general the displayed images, are also to be received and analyzed. This is shown in Fig. 3a by means of arrow 1a, indicating the interception and receipt of the user commands cmd by this rate controller block. Furthermore the rate controller functionality implies a recalculation of the encoding parameters to be used by the server encoder E, and the provision of these possibly adapted parameters to the encoders. This is shown by means of arrow 2. The encoding parameters which can be influenced are e.g. the quantization parameter QP, etc. that it has to use.

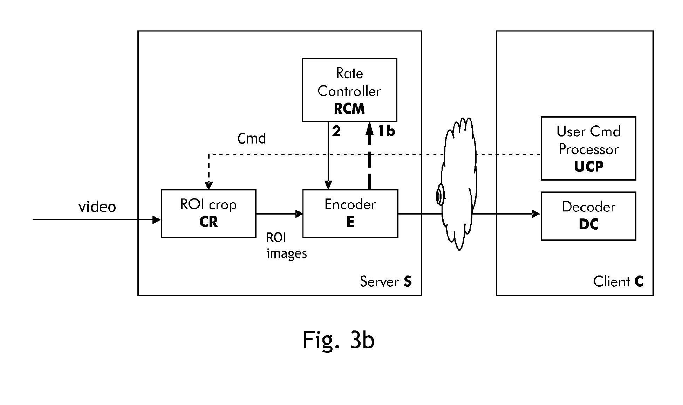

In an alternative embodiment, depicted in Fig. 3b, the movement of the ROI is detected indirectly by monitoring the server encoder motion estimation performances. This monitoring is depicted by means of arrow 2a, from the server encoder E to the rate controller module RCM.

Both embodiments will now be explained more into detail. For the further explanation it is assumed that frames are encoded in the same order as the display order using simple sequences of I and P frames. In case the display and encoding order become different, the encoder can also instruct the rate controller on the coding frame ordering. This allows the rate controller to measure ROI motion with respect to the reference frame to be used for coding the current frame (which may be different from the previous frame in display order).

In the embodiment depicted in Fig. 3a direct input from user navigation commands is provided to the rate controller. In a variant, successive ones of such user navigation commands can be intercepted by the rate controller, which is adapted to analyze them, and to derive from them a 2D translation vector between two consecutive frames, expressed in pixels. Based on this information, the rate controller can easily derive a ROI speed expressed as the length of the translation vector in pixels/frame.

The ROI motion is then compared against a predetermined threshold and can thus be considered fast when the computed speed is above this given threshold e.g. above 5 pixels/frame. In some embodiments optimal threshold values can be determined empirically beforehand.

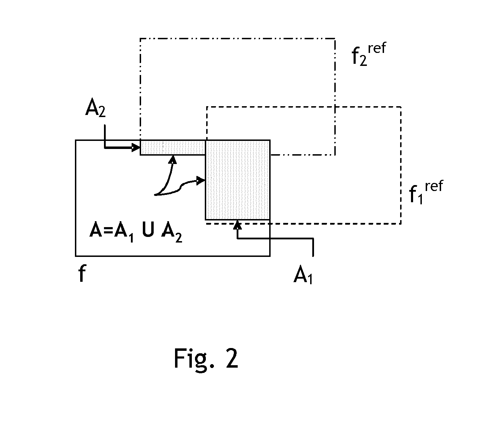

In another embodiment other metrics can be calculated for the determination of the ROI motion. An example can be by computing the percentage of overlapping area between the current ROI and available reference frames which are used for encoding of the current ROI. This is illustrated on Figure 2, showing the current frame f, depicted in full line, as well as two reference frames f₁^{ref} and f₂^{ref} used for the encoding of the current frame f. If the union of overlapping regions A, used for the encoding of the ROI under consideration is smaller than a threshold T, the ROI motion is considered to be fast and exceeding the threshold, such as to enable the adaptation of encoding parameters. If this area is smaller than the predetermined threshold, the ROI motion is still considered as slow, and live motion estimation prediction is still used, meaning that the encoding parameters are not to be adapted. In this example, the threshold may be given by the total area of the ROI minus two columns times two rows of macroblocks. This enables to cover any 2D ROI motion with respect to the chosen number of reference frames used by the encoder.

In other variant embodiments user navigation's input could also be expressed in other forms, depending on the type of interactivity modes: e.g. as zooming factors, 3D rotation matrix, etc. Metrics can also be derived from such data, and be compared against predetermined thresholds for these metrics.

In the embodiment depicted in Fig. 3b, ROI motion can also be detected by getting feedback on how the encoder E is performing with respect to motion estimation. The ROI motion is therefore indirectly detected based on some statistics on the coding decisions made by the encoder, for instance:
- If the amount of intra-coded macro blocks in inter-predicted frames gets above a predetermined threshold
- If the average energy in the residual signal gets above a certain threshold
- If the resulting bit rate peaks above a predefined target bit rate and margin

Such measurement can be used on-the-fly by the rate controller RCM to update the encoding parameters or can be used in an offline manner to learn how to define the best threshold for the cases of the embodiments according to Fig. 3a described in the previous paragraphs.

For all embodiments described with respect to Figs. 3a-b, it is the objective to instruct the encoder with suitable adapted encoding parameters in case high ROI motion is detected. This will enable to avoid bitrate peaks, prevent visible artifacts and reduce processing complexity.

In an embodiment the encoding parameters are modified so as to prevent bitrate peaks as the inability of the encoder to do a proper motion estimation usually leads to a lot of intra-frame coded information. The basic lever to decrease the bitrate is to modify the quantization parameter QP, from the information on ROI motion. The way the rate controller RCM uses this information to vary the QP for the encoder can be as follows : in case the ROI speed is lower than the threshold, the rate controller outputs a low QP (resulting in a high quality image) . In an embodiment a QP value equal or less than 16 can e.g. be selected. When the ROI speed increases, the output QP is increased as well. In general, the rate controller implements a function QP=f(ROI-speed), where this function can be linear, step-wise etc. The best matching function can be determined using experiments. A very simple step-wise function could for instance be the following
- default for low motion: QP=16
- high motion: QP=32

In another embodiment the encoding parameters can be adapted with the aim to limit the user-perceived impact on quality. By nature, when the ROI motion is high, the user will be less sensitive to pixel accuracy. However at high QP, a static macroblock-grid may become apparent (blocking artefacts). In this case, the in-loop deblocking filter of the encoder can be enabled or strengthened. In the H.264 standard, an in-loop deblocking filter is defined. Its parameters can either be inferred from other coding parameters in the bitstream (in particular from the quantization parameters) or explicitly signalled in the slice header when the flag *deblocking_filter_control_present_flag* is set to 1. The encoder can then signal a forced use of the deblocking filter by setting the disable_deblocking_filter to 0 and control how the strength of the deblocking filter is influenced by the QP with the parameters s/tce_o/pho_c0_offsef_dtv2 and *slice_beta_offset_div2.* The higher the values of both parameters are, the more often the deblocking filter will be applied across block boundaries (for a given QP value).

The way the rate controller uses the ROI speed to control these parameters can be as follows. The filter can be forced when fast ROI motion is detected as described above, possibly with a threshold value optimized for filtering control to be determined experimentally. In that case, the *slice_alpha_cO_offset_div2* and *slice_beta_offset_div2* are defined as an increasing function of the ROI speed. Functions that yield the most pleasing visual effect can be determined empirically.

In a third embodiment, when high ROI motion is detected, the encoder may decide to code macroblocks in intra mode. In order to save some computational cycles, the rate controller can therefore enforce intra-coding of macroblocks, when fast ROI motion is detected as described above (possibly with a threshold value optimized for processing complexity control). This allows the encoder to skip the processing steps for motion estimation.

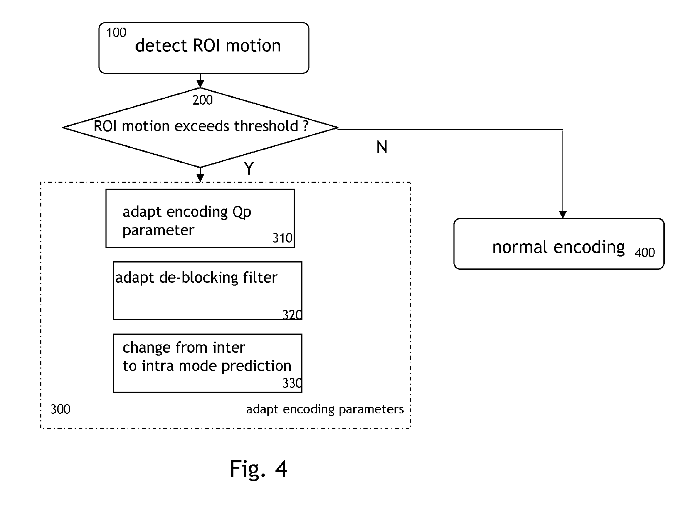

It is evident that the above mentioned adaptations of encoding parameters can be combined in whichever order, in other embodiments. Fig. 4 illustrates this by giving an embodiment of a flowchart illustrating the different steps of the method. In a first step, 100, the ROI motion is to be detected, e.g. by means of the methods previously described. This ROI motion, expressed by means of a suitable metric, which can vary from embodiment to embodiment, is to be compared against a predetermined suitable threshold in step 200. When this threshold is exceeded, one or more encoding parameters may be adapted. A list of three adaptations are mentioned in respective steps 310 to 330, but they may be combined in whichever order, or selected separately for being implemented in just one selected adaptation of one encoding parameter, under item 300. When the threshold is not exceeded, the encoding is not changed, and normal encoding is used, as step 400 indicates.

While the principles of the invention have been described above in connection with specific apparatus, it is to be clearly understood that this description is made only by way of example and not as a limitation on the scope of the invention, as defined in the appended claims. In the claims hereof any element expressed as a means for performing a specified function is intended to encompass any way of performing that function. This may include, for example, a combination of electrical or mechanical elements which performs that function or software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

## Claims

1. A method for adapting at least one video encoding parameter to be used for encoding of a video for being transmitted from a server (S) to a client (C) , said method comprising a step of determining whether the movement speed of a region of interest over successive ones of previously encoded and transmitted frames of said video exceeds a predetermined threshold value, and a step of adapting said at least one video encoding parameter if said predetermined threshold value is exceeded.

2. Method according to claim 1, wherein said movement speed of said region of interest is determined by monitoring commands issued by said client on said region of interest.

3. Method according to claim 1 wherein said movement speed of said region of interest is determined by monitoring previously determined encoding decisions used during encoding of previous frames .

4. Method according to any of the previous claims 1-3 wherein said at least one parameter is a quantization parameter and wherein said quantization parameter is adapted such as to increase with increasing movement speed of said region of interest.

5. Method according to any of the previous claims 1-4, wherein said at least one encoding parameter relates to a changing from inter to intra-coding, such that in case said movement speed of said region of interest exceeds said predetermined threshold value, intra-coding of macroblocks will be enforced.

6. Method according to any of the previous claims 1-5, wherein said at least one encoding parameter relates to the use of a deblocking filter which is enforced in case said movement speed of said region of interest exceeds said predetermined threshold value.

7. Video server (S) for encoding a video for subsequent transmission towards a client (C) coupled to said video server (S) , said video server (S) being adapted to determine whether the movement speed of a region of interest over successive ones of previously encoded and transmitted frames of said video exceeds a predetermined threshold value, and to adapt at least one video encoding parameter if said predetermined threshold value is exceeded.

8. Video server (S) according to claim 7 further being adapted to determine said movement speed of said region of interest is by monitoring commands issued by said client on said region of interest.

9. Video server (S) according to claim 7 further being adapted to determine said movement speed of said region of interest by monitoring previously determined encoding decisions used during encoding of previous frames .

10. Video server (S) according to any of the previous claim 7-9, wherein said at least one parameter is a quantization parameter and wherein said video server is able to adapt said quantization parameter such as to increase with increasing movement speed of said region of interest.

11. Video server (S) according to any of the previous claims 7-10, wherein said at least one encoding parameter relates to a changing from inter to intra-coding, such that in case said movement speed of said region of interest exceeds said predetermined threshold value, intra-coding of macroblocks will be enforced.

12. Video server (S) according to any of the previous claims 7-11, wherein said at least one encoding parameter relates to the use of a deblocking filter which is enforced in case said movement speed of said region of interest exceeds said predetermined threshold value.

13. A computer program product comprising software adapted to perform the method steps in accordance to any of the claims 1 to 6, when executed on a data-processing apparatus.
